# EUROPÄISCHE PATENTSCHRIFT

(11) **EP 0 362 742 B1**
(45) Veröffentlichungstag und Bekanntmachung des Hinweises auf die Patenterteilung: **21.12.1994**
(21) Anmeldenummer: 89118173.7
(22) Anmeldetag: 30.09.1989
(51) Int. Cl.: B27G 11/00, C09J 5/04, C09J 161/00

(54) **Verfahren zum getrennten Auftragen eines flüssigen Zweikomponenten-Leimsystems auf die Oberfläche von Holzteilen**
Process for the separate application of a liquid two-component adhesive system to the surfaces of wooden parts
Procédé d'application séparée d'un système de colle liquide à deux composants sur la surface de parties en bois

(30) Priorität: 06.10.1988 DE 3834026
(43) Veröffentlichungstag der Anmeldung: 11.04.1990
(73) Patentinhaber: BASF Aktiengesellschaft, 67063 Ludwigshafen (DE)
(72) Erfinder: Neumann, Claus, Dr., D-6520 Worms 1 (DE); Duda, Ulrich-Michael, Dr., D-6710 Frankenthal (DE); Pfuetze, Eberhard, Dr., D-6506 Weinheim (DE); Winter, Jürgen, D-6940 Nackenheim (DE); Karau, Dieter, D-6831 Plankstadt (DE); Neuner, Sepp, D-8051 Gammelsdorf (DE)

(56) Entgegenhaltungen:
- EP-A- 0 241 891
- DE-A- 2 416 032

## Beschreibung

Die vorliegende Erfindung betrifft ein Verfahren zum getrennten Auftragen eines flüssigen Zweikomponenten-Leimsystems auf die Oberfläche von Holzteilen.

Es sind viele Verfahren zum Auftragen von Leim auf die Oberfläche von Holzteilen bekannt. So wird in der DE-B 21 01 800 ein Verfahren zum Auftragen von Leim bei der Herstellung von Holzleimkonstruktionen beschrieben, wobei der Leim als fertiges Gemisch in einem Kreislauf umlaufend gehalten wird und in Form von Schnüren auf die Werkstück-Breitseite aufgebracht wird.

Nachteilig bei diesem Verfahren ist, daß beim Verpressen der Holzteile der Leim stellenweise keinen zusammenhängenden Film bildet und es zu Fehlstellen in den Holzleimkonstruktionen kommen kann. Außerdem ist die Verarbeitungszeit jedes Ansatzes begrenzt, da die Viskosität des Leimes mit der Zeit ansteigt.

In der DE-A 24 16 032 wird ein Verfahren zum zusammenfügen von Holzprodukten beschrieben, wobei das flüssige Harz und der flüssige Härter jeweils getrennt mittels eines Streifenverteilers aufgetragen wird.

Nachteilig an diesem Verfahren ist, daß es neben der oben geschilderten Bildung von Fehlstellen auch noch zu stellenweise ungenügender Vermischung von Härter und Harz kommen kann, wobei benetzte Stellen entstehen können, die nicht oder nur ungenügend aushärten.

In der EP-A-241 891 wird eine Vorrichtung zum Auftragen von Leim auf Holzteile beschrieben, mit deren Hilfe ein Gießfilm mittels eines Leitorganes gebildet wird. Die deutsche Patentanmeldung 37 12 347.5 sieht für dieses Leitorgan noch Verbesserungen in Form von luftstauverhindernden Einrichtungen vor. Das Leim-Harz und der Härter werden getrennt mit jeweils einer dieser Vorrichtungen als Gießfilm auf die Oberfläche der Holzteile aufgetragen.

Bei dieser Auftragsart kann es dazu kommen, daß der mengenmäßig viel kleinere Anteil an Härter bei hohen Durchlaufgeschwindigkeiten des zu beschichtenden Holzes Filmabrisse zeigt mit der Folge, daß es im verleimten Holz zu Fehlstellen infolge nicht ausgehärteten Leims kommt.

Aufgabe der vorliegenden Erfindung war es, ein Verfahren zum Auftragen eines flüssigen Zweikomponenten-Leimsystems zu entwickeln, das einen gleichmäßigen Auftrag beider Komponenten bei möglichst guter Durchmischung gestattet und das Fehlstellen in Form von nichtbenetzten Flächen bzw. unvollkommener Durchmischung der Komponenten vermeidet.

Gelöst wurde die Aufgabe durch einen Auftrag einer Komponente als Gießfilm und der anderen Komponente als Streifengemäß dem Kennzeichen des vorliegenden Anspruch 1.

Gegenstand der vorliegenden Erfindung ist ein Verfahren zum getrennten Auftragen eines flüssigen Zweikomponenten-Leimsystems auf die Oberfläche von Holzteilen, bei dem man eine der beiden Komponenten als Gießfilm und die andere als Streifen aufträgt. Die zu diesem Verfahren erforderliche Vorrichtung gemäß der deutschen Patentanmeldung P 37 12 347.,5 zum darin beschriebenen Auftragen von Leimharz ist bekannt und nicht Gegenstand der vorliegenden Erfindung. Diese Vorrichtung besteht im wesentlichen aus einem Vorratsbehälter, einem als zylindrischer Hohlkörper ausgebildeter, mit Austrittsöffnungen und einem Leitorgan versehenen Gießkopf, einer Vorschubeinrichtung für das zu beschichtende Holz, eine Auffangwanne und der dazugehörigen Ringleitung mit zwei Pumpen. Wesentlich für das Verfahren sind die den Luftstau verhindernden Einrichtungen am Leitorgan des Gießkopfes.

Der Streifenverteiler für das Auftragen einer Komponente ist ebenfalls bekannt und ist in der DE-AS 21 01 800 beschrieben.

Durch den getrennten Auftrag der zwei flüssigen Komponenten können beide in den Auftragsvorrichtungen beliebig lang im Kreislauf geführt werden ohne eine Zwischenreinigung der Vorrichtung.

Das erfindungsgemäße Verfahren erlaubt den Einsatz von verschiedenartigen flüssigen Leimen, z.B. von Aminoplast- oder Phenoplast-Harzen wie Formaldehyd-Harnstoff-Kondensate, Formaldehyd-Harnstoff-Melamin-Kondensate, Formaldehyd-Harnstoff-Melamin-Phenol-Kondensate, Formaldehyd-Phenol-Kondensate, Formaldehyd-Phenol/Resorcin-Kondensate oder Resorcin-Formaldehyd-Kondensate oder 4,4'-Diphenylmethandiisocyanat.

Als Härter für die Aminoplast-Harze sind Säure enthaltende und Säure bildende Verbindungen geeignet. Bevorzugt werden Ammoniumsalze, organische und anorganische Säuren verwendet. Als Härter für die Phenoplast-Harze sind Formaldehyd und/oder Formaldehyd abspaltende Verbindungen geeignet. Die Härterdosierung richtet sich nach den angestrebten Aushärtungszeiten.

Die flüssigen Komponenten sind sowohl in thixotropen wie auch in nichtthixotropen Einstellungen verwendbar. Die thixotropen Einstellungen enthalten übliche Thixotropiermittel wie Silikate.

Die Viskosität des Leim-Harzes liegt zwischen 100 bis 10.000, bevorzugt 500 bis 5.000 Pas.

Die Vorschubgeschwindigkeit des Holzes, das unter den als Film oder Streifen aufgetragenen flüssigen Komponenten durchläuft, beträgt 0,5 bis 4 m/s, bevorzugt 1,5 bis 3 m/s.

Der Gesamtauftrag der beiden flüssigen Komponenten beträgt dabei 40 bis 600 g/m².

Nach dem erfindungsgemäßen Verfahren werden Holzteile mit einer gleichmäßigen Leimschicht erhalten, die zur Herstellung von verleimten Holzteilen verwendet werden können.

### Beispiel

Das erfindungsgemäße Verfahren wurde erprobt in Verleimungsversuchen mit Buchenholz-Probestücken vom Format 150 x 300 mm.

Ein Phenol-Resorcin-Formaldehyd-Kondensationsprodukt im Molverhältnis Phenol : Resorcin : Formaldehyd 1:0,8:1, mit einem Trockengehalt von 65±1 Gew.% (2 h/120°C) und einer Viskosität bei 20°C von ca. 2700 mPa·s wurde mittels eines Gießfilms auf die Probestücke aufgebracht. Die Auftragsmenge lag bei etwa 320 g/m². Ein flüssiger Härter, bestehend aus ca. 10 % Formaldehyd sowie Füll-, Hilfs- und Thixotropiermitteln wurde in Form von Streifen anschließend aufgetragen.

Die Härterauftragsmenge betrug ca. 110 g/m². Danach wurden von den beleimten Probestücken gemäß DIN 53 254, Abschn. 5, die Bindefestigkeiten bei Raumklima sowie wechselnden Klimabedingungen gemäß DIN 68 141 in Verbindung mit DIN 53 254 ermittelt. Die normmäßig geforderten Mindestbindefestigkeiten wurden in allen Fällen erreicht bzw. überschritten.

## Patentansprüche

1. Verfahren zum getrennten Auftragen eines flüssigen Zweikomponenten-Leimsystems auf die Oberfläche von Holzteilen, dadurch gekennzeichnet, daß man eine der beiden Komponenten als Gießfilm in Form von ganzflächigem Auftragen dieser Komponente auf das Holzteil mittels eines die gesammte Breite des Holzteiles überspannenden Gießvorhanges vorsieht und die andere Komponente als Streifen welche zueinander beabstanded und ganzflächig über das Holzteil verteilt sind, aufträgt.

2. Verfahren nach Anspruch 1, dadurch gekennzeichnet, daß man mindestens eine der Komponenten in einem Kreislauf umlaufend hält.

3. Verfahren nach einem der Ansprüche 1 bis 2, dadurch gekennzeichnet, daß man eine der Komponenten über einen Vorratsbehälter, einen mit einem Leitorgan versehenen Gießkopf, unter dem eine Vorschubeinrichtung für die Holzteile angeordnet ist, und über eine Auffangwanne im Kreislauf umlaufend hält.

4. Verfahren nach einem der Ansprüche 1 bis 3, dadurch gekennzeichnet, daß man eine der Komponenten als Schnüre oder Streifen auf die Oberfläche der Holzteile aufträgt.

5. Verfahren nach einem der Ansprüche 1 bis 4, dadurch gekennzeichnet, daß man als eine der Komponenten ein Harnstoff-Formaldehyd-, Harnstoff-Melamin-Formaldehyd-, Harnstoff-Melamin-Phenol-Formaldehyd-Harz und als andere Komponente eine Säure bildende und/oder Säure enthaltende Verbindung als Härter verwendet.

6. Verfahren nach einem der Ansprüche 1 bis 5, dadurch gekennzeichnet, daß man als eine der Komponenten ein Phenol-Formaldehyd-, Resorcin-Formaldehyd-, Phenol-Resorcin-Formaldehyd-Harz und als andere Komponente eine Verbindung, die Formaldehyd enthält oder diesen abspaltet, als Härter verwendet.

## Claims

1. A process for the separate application of a liquid two-component glue system to the surface of wooden parts, characterized in that one of the two components is provided as a cast film in the form of the uniform application of this component to the wooden part by means of a casting curtain overspanning the entire width of the wooden part and the other component is applied in the form of strips which are mutually spaced apart and distributed uniformly over the wooden part.

2. A process as claimed in claim 1, characterized in that at least one of the components is recirculated.

3. A process as claimed in claim 1 or 2, characterized in that one of the components is kept in recirculation via a stock reservoir vessel, via a casting head provided with a guiding element arranged above the forward feed means of the wooden parts, and via a receiver tank.

4. A process as claimed in any of claims 1 to 3, characterized in that one of the components is applied to the surface of the wooden parts in the form of ribbons or strips.

5. A process as claimed in any of claims 1 to 4, characterized in that one of the components used is a urea-formaldehyde, urea-melamine-formaldehyde or urea-melamine-phenol-formaldehyde resin and the other component is an acid-forming and/or acid-containing compound as hardener.

6. A process as claimed in any of claims 1 to 5, characterized in that one of the components used is a phenol-formaldehyde, resorcinol-formaldehyde or phenol-resorcinol-formaldehyde resin and the other component used, as a hardener, is a compound which contains or eliminates formaldehyde.

## Revendications

1. Procédé d'application séparée d'un système de colle liquide à deux composants à la surface de pièces de bois, caractérisé en ce qu'on applique un des deux composants sous forme de film coulé, l'application de ce composant se faisant sur toute la surface de la pièce de bois à l'aide d'un rideau de coulée recouvrant toute la largeur de la pièce de bois, et l'autre composant sous forme de bandes écartées l'une de l'autre et réparties sur toute la surface du bois.

2. Procédé suivant revendication 1, caractérisé en ce qu'on maintient au moins un des composants en circuit fermé permanent.

3. Procédé suivant une des revendications 1 ou 2, caractérisé en ce qu'on maintient un des composants en circuit fermé permanent via un réservoir de stockage, une tête de coulée pourvue d'un organe de guidage, en dessous duquel est placé un dispositif d'avance pour les pièces de bois, et via un bac de récupération.

4. Procédé suivant une des revendications 1 à 3, caractérisé en ce qu'on applique un des composants sous forme de bandes ou de cordons à la surface des pièces de bois.

5. Procédé suivant une des revendications 1 à 4, caractérisé en ce qu'on emploie pour un des composants une résine de formaldéhyde-urée, urée-mélamine-formaldéhyde, urée-mélamine-phénol-formaldéhyde et comme autre composant servant de durcisseur un composé formant et/ou contenant un acide.

6. Procédé suivant une des revendications 1 à 5, caractérisé en ce qu'on emploie pour un des composants une résine phénol-formaldéhyde, résorcine-formaldéhyde ou phénol-résorcine-formaldéhyde et comme autre composant en tant que durcisseur un composé qui contient ou libère du formaldéhyde.
